# EUROPEAN PATENT SPECIFICATION

(11) **EP 4 267 535 B1**
(45) Date of publication and mention of the grant of the patent: **26.11.2025**
(21) Application number: 21839594.5
(22) Date of filing: 28.12.2021
(51) Int. Cl.: C05B 17/00, C05C 11/00, C05D 9/00, C05D 9/02, C05F 11/10, C05G 5/23, C05G 5/27

(54) **AQUEOUS FERTILIZER COMPOSITIONS**
WÄSSRIGE DÜNGEMITTELZUSAMMENSETZUNGEN
COMPOSITIONS D'ENGRAIS AQUEUSES

(30) Priority: 28.12.2020 EP 20217441
(43) Date of publication of application: 01.11.2023
(73) Proprietor: Lima Europe, 2840 Rumst (BE)
(72) Inventor: POCKELÉ, Stefaan, 2650 Edegem (BE); RAEYMAECKERS, Leo, 2840 Reet (BE)
(74) Representative: Gevers Patents
(86) International application number: PCT/EP2021/087742
(87) International publication number: WO 2022/144364

(56) References cited:
- EP-A1- 0 054 096
- EP-A2- 1 254 878
- WO-A2-2007/092180
- US-A- 3 897 241
- US-A- 4 244 727

## Description

### FIELD OF INVENTION

The present invention relates to improved aqueous fertilizer compositions comprising an alkanolamine salt of a sulphonic acid in which the major plant nutrients can all be combined in one single concentrate without any precipitation of insoluble salts, said improved aqueous fertilizer compositions thereby demonstrating excellent stability and solubilizing and dosing properties. The invention further relates to the use of said aqueous fertilizer compositions for fertilization purposes to provide plant nutrition for growing plants.

### BACKGROUND OF THE INVENTION

For healthy and rapid growth, plants require a variety of elements for adequate nutrition. The essential elements carbon, hydrogen, and oxygen are provided by carbon dioxide and water, materials which are usually available in adequate amounts from both the soil and the atmosphere. The supply of carbon dioxide and water is continually replenished by natural phenomena.

Various other elements are known also to be essential to plant nutrition. These elements are normally drawn from the soil. If the soil nutrient supply is deficient, the application of fertilizer is necessary. Within these various elements, nitrogen, phosphorus, and potassium are needed by plants in relatively large quantities and are accordingly called the primary macronutrients. Calcium, magnesium, and sulphur are generally required in lower, though still substantial, amounts and are classified as secondary macronutrients. Other elements are known as micronutrients since they are required in small amounts for plants growth. These micronutrients notably include iron, manganese, copper, zinc, molybdenum, and boron. It goes without saying that an adequate supply of these primary macronutrients, secondary macronutrients, and micronutrients is required for healthy growth of plants.

In the fertilizer industry, it is common practice to apply inorganic fertilizers to crops in order to improve the overall yield and quality. Solid fertilizers such as granules or flakes comprising one or more primary macronutrients represent the most common type of fertilizer and are typically applied to the soil. Such solid fertilizers are for instance disclosed in WO 2007/092180 A2. The disclosure of WO 2007/092180 A2 specifically relates to solid fertilizer compositions comprising an oxidizing agent, such as a peroxide, useful for improving oxygen supply to plants when subjected to hypoxic stresses and for providing the controlled release of bioavailable oxygen to promote plant survival, plant growth, and increased crop yield. The level and rate of bioavailable oxygen released from the solid fertilizer composition can be controlled by the addition of companion cations such as Mg²⁺, Mn²⁺, Ca²⁺, Cu²⁺, and Zn²⁺; cation reducing agents such as triethanolamine; and/or pH modulating compounds such as biological buffers of *N*-(2-acetamido)-2-aminoethanesulphonic acid (ACES); *N*-(2-hydroxyethyl)-piperazine-*N*'-2-ethanesulphonic acid (HEPES); and 2-(*N*-morpholino)ethanesulphonic acid (MES).

However, liquid fertilizers comprising primary macronutrients, secondary macronutrients, and micronutrients, alone or in combination, are also available and are becoming increasingly important since they offer certain advantages with reference to convenience, flexibility, accuracy of delivery, and overall ease of application. Moreover, it is highly desirable that these liquid fertilizer compositions are available as concentrated compositions in which the major plant nutrients can all be combined in one single concentrate without any precipitation of insoluble salts, thereby furthermore reducing transport and storage costs, packaging waste, improving productivity, and thereby facilitating modern methods of application and dosing.

EP 0054096 A1 describes stabilized aqueous urease solutions, and processes for the manufacturing thereof. The stabilized urease solutions are formulated by blending water; buffering agents such as *N*-(2-hydroxyethyl)-piperazine-*N*'-2-ethanesulphonic acid, triethanolamine, tris(hydroxymethyl)aminomethane, diethanolamine, and aminomethyl propanol; a bacteriostat; a chelating agent; a polyhydroxy organic compound; and urease.

WO 2019/106338 A1 describes aqueous fertilizer compositions comprising an alkanolamine salt of phosphoric acid, in particular a mono-ethanolamine salt of phosphoric acid. Furthermore, these aqueous fertilizer compositions may further comprise an alkanolamine complex with the micronutrients boron, copper, iron, and zinc, said alkanolamine complex being miscible and soluble in these concentrated aqueous fertilizer compositions, and one or more elements selected from the group of calcium, magnesium, sulphur, manganese, molybdenum, and the like. Moreover, the disclosed aqueous fertilizer compositions are defined by a phosphorus content, as expressed in content of P₂O₅, from 5 to 40 weight percentage.

However, when aqueous fertilizer compositions comprise high phosphorus contents problems may arise upon application of said aqueous fertilizer compositions for example via root or foliar feeding. In these cases, significant amounts of phosphorus are added to the environment. Overfertilization and overusage is a major and common problem for fertilizers high in their respective phosphorus content. Particularly, an overabundance of phosphorus in the soil not only fails to resolve the nutrient deficiency problem but can actually make matters worse by causing leaf chlorosis and harming beneficial marine animals and microorganisms living in soil. Another major disadvantage of phosphate fertilizers is the high probability of water pollution. Phosphorus, which makes its way into soil via the application of phosphate fertilizers containing high contents of phosphorus, binds tightly to soil particles. If large quantities of phosphate fertilizer is applied to the soil, excess of phosphorus can easily find its way into water systems via storm drains and plumbing possibly leading to algae and bacteria outbreaks, eutrophication, and water contamination issues.

In view of all the above, there is a continuous need to provide improved aqueous fertilizer compositions which are more environmentally friendly and in which the major plant nutrients can all be combined in one single concentrate without any precipitation of insoluble salts, said improved aqueous fertilizer compositions thereby demonstrating excellent stability and solubilizing and dosing properties.

### SUMMARY OF THE INVENTION

The Applicant has now surprisingly found that it is possible to provide an improved aqueous fertilizer composition fulfilling the above mentioned needs.

Thus, there is now provided an aqueous fertilizer composition [composition (C), herein after] comprising at least one alkanolamine salt of a sulphonic acid according to general Formula (Is) [compound (S), herein after] 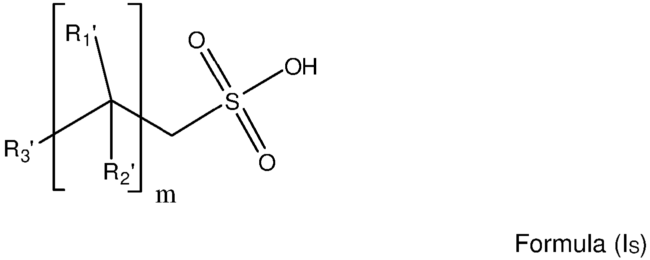 wherein:
- each of m is an integer in the range from 0, 1, or 2;
- each of R₁' is independently selected from the group consisting of hydrogen, halo, methyl, ethyl, propyl, isopropyl, and CF₃;
- each of R₂' is independently selected from the group consisting of hydrogen, halo, methyl, ethyl, propyl, isopropyl, and CF₃; and
- each of R₃' is independently selected from the group consisting of hydrogen, halo, C₁₋₄ alkyl, and Si(R₄')₃, and wherein said C₁₋₄ alkyl is optionally substituted with one or more substituents selected from halo, or methyl, and wherein each of R₄', independently from each other and at each occurrence, is C₁₋₄ alkyl.

In another aspect the present invention further provides a use of the composition (C), as detailed above, for fertilization purposes.

### DETAILED DESCRIPTION OF THE INVENTION

### COMPOSITION (C)

Within the context of the present invention, the term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that an aqueous fertilizer composition comprising at least one alkanolamine salt of a sulphonic acid according to general Formula (I_{S}) [compound (S), herein after], as detailed above, yields aqueous fertilizer compositions which are more environmentally friendly and in which the major plant nutrients can all be combined in one single concentrate without any precipitation of insoluble salts, said improved aqueous fertilizer compositions thereby demonstrating excellent stability and solubilizing and dosing properties.

Within the context of the present invention, the expression "at least one alkanolamine salt of a sulphonic acid according to general Formula (I_{S}) [compound (S), herein after]" is intended to denote one or more than one alkanolamine salt of compound (S). Mixtures of alkanolamine salts of compound (S) can also be used for the purpose of the invention.

In the rest of the text, the expression "alkanolamine salt of compound (S)" is understood, for the purposes of the present invention, both in the plural and the singular form, that is to say the composition (C) of the present invention may comprise one or more than one alkanolamine salt of compound (S).

As used herein the term "alkyl" has the broadest meaning generally understood in the art, and may include a moiety which is linear or branched, or a combination thereof.

The term "alkyl" - alone or in combination means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (tert-butyl), 2-methyl-1-propyl (isobutyl).

As said above, the composition (C), as detailed above, comprises a compound (S) according to general Formula (Is), as detailed above.

Preferably, each of R₁' is independently selected from the group consisting of hydrogen, halo, methyl, and ethyl. More preferably, each of R₁' is independently selected from hydrogen or methyl. Most preferably, each of R₁' is hydrogen.

Preferably, each of R₂' is independently selected from the group consisting of hydrogen, halo, methyl, and ethyl. More preferably, each of R₂' is independently selected from hydrogen or methyl. Most preferably, each of R₂' is hydrogen.

Preferably, each of R₃' is independently selected from the group consisting of hydrogen, halo, methyl, ethyl, propyl, isopropyl, and Si(R₄')₃, and wherein each of R₄', equal to or different from each other and at each occurrence, is independently selected from the group consisting of methyl, ethyl, propyl, and isopropyl. More preferably, each of R₃' is independently selected from the group consisting of hydrogen, halo, methyl, ethyl, and Si(R₄')₃, and wherein each of R₄', equal to or different from each other and at each occurrence, is methyl or ethyl. Even more preferably, each of R₃' is independently selected from the group consisting of hydrogen, halo, methyl, and Si(R₄')₃, and wherein each of R₄' is methyl. Yet even more preferably, each of R₃' is independently selected from hydrogen or methyl. Most preferably, each of R₃' is hydrogen.

Preferred compounds (S) according to general Formula (I_{S}) are selected from those of Formula (I_{S}-a) to (I_{S}-e) herein below:

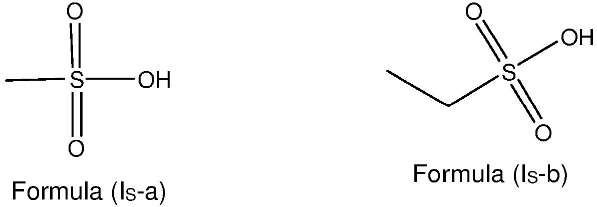

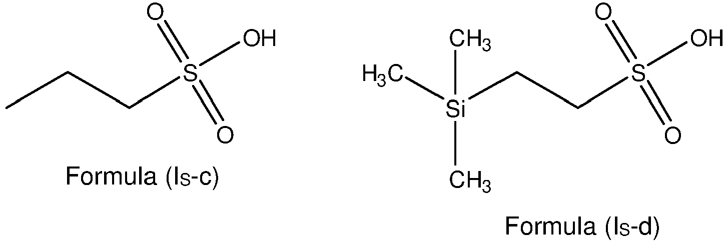

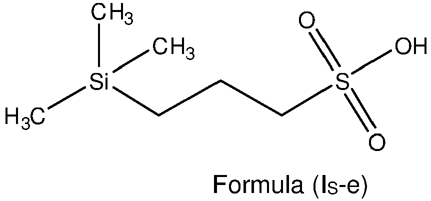

Most preferred compound (S) according to general Formula (I_{S}) is the one of Formula (I_{S}-a) herein below:

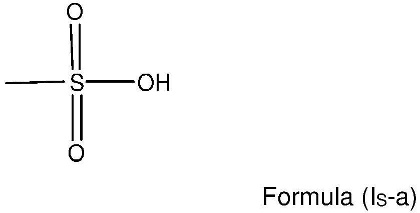

Compound (S) according to general Formula (I_{S}) of the present invention may be commercially available or may be chemically synthesized. Said synthesis of compound (S) according to general formula (I_{S}) may be carried out using conventional methods known to the skilled in the art.

It is further understood that all definitions and preferences as described for compound (S) according to general Formula (I_{S}) above equally apply for this embodiment and all further embodiments, as described below.

According to certain embodiments of the present invention, the composition (C), as detailed above, further comprises at least one alkanolamine metal or boron complex, wherein the metal is chosen among zinc (Zn), copper (Cu), manganese (Mn), or iron (Fe).

Within the context of the present invention, the expression "at least alkanolamine metal or boron complex" is intended to denote one or more than one alkanolamine metal or boron complex. Mixtures of alkanolamine metal or boron complexes can also be used for the purpose of the invention. In the remainder of the text, the term "alkanolamine metal or boron complex" is understood, for the purposes of the invention both in the plural and the singular form.

The inventors have now surprisingly found that the alkanolamine metal or boron complexes, as detailed above, possess excellent properties to solubilize, and therefore to incorporate, the above-mentioned metals or boron in high concentrations in the composition (C), as detailed above, thereby allowing the composition (C) to be used without the need of compounds based on phosphoric acid as those disclosed in the fertilizer compositions of WO 2019/106338 A1 as vehicles to add said metals or boron in high concentrations to a fertilizer composition. The aqueous fertilizer compositions according to the present invention are therefore more environmentally friendly, while maintaining the compatibility and the flexibility to solubilize, and therefore to incorporate, valuable plant nutritional metals and boron in high concentrations.

As non-limiting examples of suitable alkanolamines, as detailed above, mention may be made of monoethanolamine, diethanolamine, triethanolamine, monoisopropanolamine, diisopropanolamine, triisopropanolamine, or 2-amino-1-butanol, preferably monoethanolamine, diethanolamine, or triethanolamine, more preferably monoethanolamine.

Within the context of the present invention, it is further understood that in the composition (C) the alkanolamine in the alkanolamine salt and the alkanolamine in the alkanolamine complex can be the same or different from each other. Preferably, the alkanolamine in the alkanolamine salt and the alkanolamine in the alkanolamine complex are the same.

The alkanolamine metal or boron complex of the present invention may be commercially available or may be chemically synthesized. Said synthesis of the alkanolamine metal or boron complex may be carried out using conventional methods known to the skilled in the art. In general, the alkanolamine boron complex can be conventionally prepared by reaction of the alkanolamine with boric acid or sodium tetraborate decahydrate, such as monoethanolamine with boric acid.

Non-limiting examples of suitable alkanolamine metal or boron complexes notably include zinc (Zn) monoethanolamine, copper (Cu) monoethanolamine, iron (Fe) monoethanolamine, boron (B) monoethanolamine, or mixtures of two or more thereof.

It is further understood that all definitions and preferences, as described above, equally apply for all further embodiments, as described below.

With regards to the relative amounts of the different ingredients as comprised in the composition (C), as detailed above, it is understood that all said relative amounts can be varied depending on the final end use of said composition (C) with the proviso that the composition (C) remains a solution in which no precipitation can occur.

In the composition (C), as detailed above, the alkanolamine is advantageously present in an amount equal to or greater than 2.0 wt. %, preferably equal to or greater than 2.5 wt. %, more preferably equal to or greater than 3.0 wt. %, relative to the total weight of the composition (C).

It is further understood that in the composition (C), as detailed above, the amount of the alkanolamine, relative to the total weight of the composition (C), is advantageously equal to or less than 30.0 wt. %, or equal to or less than 20.0 wt. %, or equal to or less than 15.0 wt. %, or equal to or less than 10.0 wt. %.

In a preferred embodiment of the composition (C) of the present invention, the alkanolamine, relative to the total weight of the composition (C), is present in the composition (C) in an amount from 2.0 to 30.0 wt. %, or in an amount from 2.0 to 20.0 wt. %, or in an amount from 2.5 to 15.0 wt. %, or in an amount from 3.0 to 10.0 wt. %.

Preferably, in the composition (C) of the present invention, the molar ratio of the compound (S) according to general Formula (Is), as detailed above, to the alkanolamine, as detailed above, is from 10.0:1.0 to 1.0:10.0, or from 5.0:1.0 to 1.0:5.0, or from 3.0:1.0 to 1.0:3.0, or from 1.5:1.0 to 1.0:1.5, or from 1.5:1.0 to 1.0:1.0.

More preferably, in the composition (C) of the present invention, the molar ratio of the compound (S) according to general Formula (I_{S}), as detailed above, to monoethanolamine, as detailed above, is from 10.0:1.0 to 1.0:10.0, or from 5.0:1.0 to 1.0:5.0, or from 3.0:1.0 to 1.0:3.0, or from 1.5:1.0 to 1.0:1.5, or from 1.5:1.0 to 1.0:1.0.

Most preferably, in the composition (C) of the present invention, the molar ratio of the compound (S) according to Formula (I_{S}-a), as detailed above, to monoethanolamine, as detailed above, is from 10.0:1.0 to 1.0:10.0, or from 5.0:1.0 to 1.0:5.0, or from 3.0:1.0 to 1.0:3.0, or from 1.5:1.0 to 1.0:1.5, or from 1.5:1.0 to 1.0:1.0.

According to certain embodiments of the composition (C), as detailed above, in the composition (C), the molar ratio of the metal or boron, as detailed above, to the alkanolamine, as detailed above, is from 10.0:1.0 to 1.0:10.0, or from 10.0:1.0 to 1.0:5.0, or from 9.0:1.0 to 1.0:3.0, or from 9.0:1.0 to 1.0:2.0, or from 8.0:1.0 to 1.0:1.0.

Within the context of the present invention, the term "aqueous" is understood to refer to solutions comprising water and water-based solutions. Preferably, the term "aqueous" is understood to refer to solutions comprising water.

For the purpose of the present inventions the term "water-based solutions" is intended to refer to solutions comprising water and at least one component selected from the group of biostimulants, herbicides, pesticides, insecticides, miticides, acaricides, nematicides, fungicides, bactericides, rodenticides and growth-regulating agents.

The inventors have surprisingly found that due to presence of at least one alkanolamine salt of a compound (S) according to general Formula (I_{S}), as detailed above, the amount of water can be kept low without the risk of precipitation of insoluble salts in the composition (C) according to the present invention.

Therefore, the amount of water, relative to the total weight of the composition (C), is advantageously equal to or less than 20.0 wt. %, preferably equal to or less than 19.0 wt. %, preferably equal to or less than 18.0 wt. %, preferably equal to or less than 17.0 wt. %, preferably equal to or less than 16.0 wt. %.

On the other side, a minimum amount of water is necessary to keep the composition (C) in a liquid form.

Advantageously, the amount of water, relative to the total weight of the composition (C), is equal to or greater than 1.0 wt. %, preferably equal to or greater than 2.0 wt. %, preferably equal to or greater than 3.0 wt. %, preferably equal to or greater than 3.5 wt. %.

In a preferred embodiment of the composition (C) of the present invention, water, relative to the total weight of the composition (C), is present in an amount from 1.0 to 20.0 wt. %, preferably from 2.0 to 19.0 wt. %, preferably from 3.0 to 18.0 wt. %, preferably from 3.0 to 17.0 wt. %, preferably from 3.5 to 16.0 wt. %.

The inventors have further found that when the composition (C) of the present invention further comprises at least one gelling agent, that the composition (C) can form a gel having further improved properties, in particular an improved plant uptake of the different fertilizing nutrients comprised in the composition (C), further improved compatibility between the different fertilizing nutrients, allowing certain fertilizing nutrient combinations to be realized without any settling of the constituting particles and particulates in said composition (C).

In general, gels are defined as a liquid system, yet they behave like solids due to the three-dimensional crosslinked network within the liquid and which exhibits no flow when in the steady state.

Within the context of the present invention, the expression "at least one gelling agent" is intended to denote one or more than one gelling agent. Mixtures of gelling agents can also be used for the purpose of the invention. In the remainder of the text, the expression "gelling agent is understood, for the purposes of the present invention, both in the plural and the singular form.

Said gelling agents are known to those skilled in the art of aqueous fertilizer compositions. Non-limiting examples of gelling agents notably include gum Arabic, alginic acid, alginates, xanthan gum, guar gum, tragacanth gum, methyl cellulose, cellulose ethers, cellulose acetate, ethyl cellulose, hydroxyethyl cellulose, hydroxyethyl methyl cellulose, starch, gelatine, carrageenan, locust bean gum, pectin, succinoglycans, and pullulan.

According to certain embodiments of the present invention, the composition (C) comprises the gelling agent in an amount equal to or greater than 0.05 wt. %, relative to the total weight of the composition (C), preferably equal to or greater than 0.06 wt. %, preferably equal to or greater than 0.07 wt. %, preferably equal to or greater than 0.08 wt. %, preferably equal to or greater than 0.09 wt. %, preferably equal to or greater than 0.10 wt. %.

It is further understood that the amount of the gelling agent, relative to the total weight of the composition (C), is advantageously equal to or less than 5.00 wt. %, preferably equal to or less than 4.00 wt. %, preferably equal to or less than 3.00 wt. %, preferably equal to or less than 2.00 wt. %, preferably equal to or less than 1.50 wt. %, preferably equal to or less than 1.00 wt. %.

In a preferred embodiment of the present invention, the composition (C) comprises the gelling agent in an amount from 0.05 to 5.00 wt. %, preferably from 0.06 to 4.00 wt. %, preferably from 0.07 to 3.00 wt. %, preferably from 0.08 to 2.00 wt. %, preferably from 0.09 to 1.50 wt. %, preferably from 0.10 to 1.00 wt. %, relative to the total weight of the composition (C).

It is further understood that all definitions and preferences, as described above, equally apply for all further embodiments, as described below.

As fertilizer to provide plant nutrition for growing plants, the composition (C) may further comprise water-soluble fertilizing nutrients selected from the group consisting of calcium (Ca) water-soluble fertilizing nutrients, nitrogen (N) water-soluble fertilizing nutrients, potassium (K) water-soluble fertilizing nutrients, and magnesium (Mg) water-soluble fertilizing nutrients.

Said calcium (Ca) water-soluble fertilizing nutrients, nitrogen (N) water-soluble fertilizing nutrients, potassium (K) water-soluble fertilizing nutrients, and magnesium (Mg) water-soluble fertilizing nutrients, respectively, are known to those skilled in the art for use in aqueous fertilizer compositions.

Non-limiting examples of calcium (Ca) water-soluble fertilizing nutrients notably include inorganic calcium salts such as calcium nitrate, calcium chloride, calcium hydroxide, calcium iodate, calcium silicate, calcium cyanamide, nitrolime, calcium carbonate, calcium ammonium nitrate (CAN), or hydrates thereof; and organic calcium salts such as calcium acetate, calcium citrate, calcium gluconate, calcium lactate, calcium ligosulphonate, or hydrates thereof.

Non-limiting examples of nitrogen (N) water-soluble fertilizing nutrients notably include ammoniacal nitrogen compounds such as urea, monomethylol urea, methylene urea, urea-triazone, isobutylidene diurea, sulphur coated urea, polymer coated urea; ammonium salts such as ammonium sulphate, ammonium nitrate-sulphate, ammonium nitrate; nitrate nitrogen compounds such as sodium nitrate, ammonium nitrate, ammonium nitrate-sulphate; and hydrates thereof.

Non-limiting examples of potassium (K) water-soluble fertilizing nutrients notably include inorganic potassium salts such as potassium oxide, muriate of potash, potassium sulphate, potassium hydroxide, potassium nitrate, potassium carbonate, potassium bicarbonate, potassium magnesium sulphate; organic potassium salts such as potassium acetate, potassium citrate, potassium gluconate, potassium lactate, potassium ligosulphonate; and hydrates thereof.

Non-limiting examples of magnesium (Mg) water-soluble fertilizing nutrients notably include inorganic magnesium salts such as magnesium sulphate, magnesium nitrate, sulphate of potash magnesia, magnesium oxide, magnesium carbonate, kieserite, magnesium chloride; organic magnesium salts such as magnesium acetate, magnesium citrate, magnesium gluconate, magnesium lactate, magnesium ligosulphonate; and hydrates thereof.

As fertilizer to provide plant nutrition for growing plants, the skilled in the art will choose a suitable combination of the different water-soluble fertilizing nutrients, as detailed above, and suitable amounts thereof according to the standard and general practice known by said skilled person in the art.

Also described is a composition (C), as detailed above, having a total calcium (Ca) content from 0.5 to 32.0 wt. %, as expressed in wt. % of CaO, relative to the total weight of the 5 composition (C), preferably from 1.0 to 26.0 wt. %, preferably from 1.3 to 20.0 wt. %, preferably from 1.6 to 14.0 wt. %, preferably from 1.8 to 10.0 wt. %, preferably from 2.0 to 8.0 wt. %, relative to the total weight of the composition (C).

Also described is a composition (C), as detailed above, having a total nitrogen (N) content from 2.5 to 35.0 wt. %, as expressed in wt. % of elemental N, preferably from 4.0 to 30.0 wt. %, preferably from 5.5 to 27.0, preferably from 6.5 to 24.0 wt. %, preferably from 7.0 to 22.0 wt. %, relative to the total weight of the composition (C).

Also described is a composition (C), as detailed above, having a total potassium (K) content 2.0 to 60.0 wt. %, as expressed in wt. % of K₂O, preferably from 2.2 to 50.0 wt. %, preferably from 2.4 to 45.0 wt. %, preferably from 2.6 to 40.0 wt. %, preferably from 2.8 to 35.0 wt. %, preferably from 3.0 to 30.0 wt. %, relative to the total weight of the composition (C).

Also described is a composition (C), as detailed above, having a total magnesium (Mg) content from 0.5 to 9.0 wt. %, as expressed in wt. % of MgO, preferably from 1.0 to 8.5 wt. %, preferably from 1.5 to 8.0 wt. %, preferably from 1.8 to 7.5 wt. %, preferably from 2.0 to 7.0 wt. %, relative to the total weight of the composition (C).

Also described is a composition (C), as detailed above, where the element sulphur (S) is substantially present in the compound (S) of general formula (Is), as detailed above.

Also described is a composition (C), as described above, having a total sulphur (S) content from 0.5 to 26.0 wt. %, as expressed in wt. % of SO₃, preferably from 1.0 to 21.0 wt. %, preferably from 1.5 to 17.0 wt. %, preferably from 2.0 to 13.0 wt. %, preferably from 2.5 to 10.0 wt. %, preferably from 3.0 to 8.5 wt. %, relative to the total weight of the composition (C).

Within the context of the present invention, the elements calcium (Ca), potassium (K), nitrogen (N), and magnesium (Mg) may be present in four separate water-soluble fertilizing nutrients or less than four water-soluble fertilizing nutrients where more than one of the calcium (Ca), potassium (K), nitrogen (N), or magnesium (Mg) elements are contained in a single water-soluble fertilizing nutrient. By way of example, magnesium nitrate comprises the elements magnesium (Mg) and nitrogen (N).

The composition (C), as detailed above, may further comprise at least one other additional ingredient [ingredient (Ic), herein after] to enhance the appearance, storage, transport, handling and/or performance of the composition (C).

Within the context of the present invention, the expression "at least one other additional ingredients [ingredient (Ic), herein after]" is intended to denote one or more than one ingredient (Ic). Mixtures of ingredients (Ic) can also be used for the purpose of the invention. In the remainder of the text, the expression "ingredient (I_{C}) is understood, for the purposes of the present invention, both in the plural and the singular form.

Said ingredients (Ic) are known to those skilled in the art of aqueous fertilizer compositions. Non-limiting examples of ingredients (I_{C}) notably include: micronutrients, surfactants, humectants, dispersing agents, suspending agents and similar ingredients to enhance the shelf life of the product, adhesion promotors, antioxidants, antifoaming agents, ultraviolet light stabilizers, antimicrobial agents, penetration accelerators, crystal growth inhibitors, soil remediation agents, colorants, pigments, fragrances, solvents, any material that facilitates the application of composition (C) such as spreading or sticking agents, antifreezes, evaporation inhibitors, anti-caking agents, and any other materials customarily employed in formulating fertilizer compositions such as pesticides, herbicides, insecticides, weedicides, miticides, fungicides, acaricides, nematicides, bactericides, rodenticides, growth-regulating agents, urease inhibitors, nitrification inhibitors, and the like.

As to the amount of the ingredients (Ic), it is understood that the skilled person in the art will practise said additional ingredients (I_{C}) in a suitable amount according to standard and general practice known by said skilled person in the art.

Typically, the amount of the ingredients (Ic), when present, is equal to or less than 20.0 wt. %, relative to the total weight of the composition (C).

The inventors have now surprisingly found that compositions (C), as detailed above, comprising both the alkanolamine salt of the compound (S) according to general Formula (I_{S}) and the alkanolamine boron complex, possess excellent properties to solubilize, and therefore incorporate, sulphur and boron in high concentrations in the compositions (C), said combined high concentrations of sulphur and boron forming an excellent plant nutrition for growing various plants, for example rapeseed.

It is further understood that all definitions and preferences, as described above, equally apply for all further embodiments, as described below.

The composition (C) of the present invention can be prepared by a variety of methods known in the art.

The composition (C), as detailed above, can be used for fertilization purposes to provide plant nutrition for growing plants.

Said uses are also an aspect of the present invention.

It is further understood that all definitions and preferences, as described above, equally apply for all further embodiments, as described below.

The use of the composition (C), as detailed above, comprises supplying composition (C) to at least part of a plant or a seed which grows or will be grown. As a general rule, such growth occurs on a substrate, such as soil (for example in a pot, in borders, in the field or in agricultural fields) or artificial media. The terms "grows", "grown" and "growing" as used herein include all physiological processes leading to an increase in cell size and/or cell number as well as those leading to cellular differentiation.

The composition (C), as detailed above, may be applied to a broad area to provide plant nutrition for growing plants in any suitable usual manner according to standard practice known by the skilled in the art taking into account factors such as temperature and weather conditions.

Among the suitable manners for supplying composition (C), as detailed above, mention can notably be made of spraying, atomizing, vaporizing, drenching, watering, squirting, sprinkling, pouring, fumigating, injecting, painting, seed treating, coating, immersing, soaking and the like by using conventional equipment such as a handpump, a backpack sprayer, a boomsprayer, and the like. Desirably, the composition (C) is supplied by spraying and drenching.

The skilled in the art will apply the composition (C), as detailed above, in a dosage sufficient to effect the desired action. This dosage is dependent upon many factors, including the method and conditions of the application.

In the present invention, the inventors have now surprisingly found that the use of the composition (C), as detailed above, for fertilization purposes to provide plant nutrition for growing plants is associated with only minor handling costs, improved ergonomics and the reduction of overall handling costs.

### EXAMPLES

The invention will be now described in more details with reference to the following examples, whose purpose is merely illustrative and not intended to limit the scope of the invention.

### General procedure for manufacturing composition (C):

Comparative Example 1 (CEx1) and Example 2 (Ex2) were prepared by admixing and homogenizing together during 30 minutes, the various ingredients, as described in Table 1 (i.e. nature and amounts) together with standard additional ingredients such as gelling agents, micronutrients, surfactants, humectants, dispersing agents, and antifoaming agents. The admixing of the various ingredients was carried out by using an electric stirrer.

In Comparative Example 1 (CEx1), use is made of aqueous phosphoric acid (85 %).

In Example 2 (Ex2), use is made of compound (S) according to formula (I_{S}-a), according to the present invention.

In Comparative Example 1 and Example 2 (Ex2) use is made of monoethanolamine.

All contents in Table 1 are given in wt. %, relative to the total weight of the respective aqueous fertilizer compositions, unless stated otherwise.

Table 1 further summarizes the total elemental content of the different elements sulphur (S), phosphorus (P), boron (B), and nitrogen (N). These total contents were calculated according to general practice to those skilled in the art in fertilizer compositions.

**Table 1: Fertilizer compositions (C): Comparative Example 1 (CEx1) and Example 2 (Ex2)**

| **Ingredients** | **CEx1** | | **Ex2** | |
|---|---|---|---|---|
| phosphoric acid 85% | 13.8 | | - | |
| compound (S) according to formula (I_{S}-a) | - | | 12.5 | |
| B-MEA | 29.0 | 4.9 water | 29.5 | 5.0 water |
| | | 5.8 MEA | | 5.9 MEA |
| | | 18.3 boric acid | | 18.6 boric acid |
| boric acid | 27.7 | | 28.1 | |
| nitrogen (N) water-soluble fertilizing nutrient | 6.2 | | 6.3 | |
| gelling agent | 2.9 | | 1.5 | |
| additional ingredients | 11.2 | | 16.7 | |
| water | 10.2 | | 5.3 | |

| **Elemental content** | | | | |
|---|---|---|---|---|
| Sulphur (S) content (in wt. % of SO₃) | - | | 10.3 | |
| Phosphorus (P) content (in wt. % of P₂O₅) | 8.4 | | - | |
| Boron (B) content (in wt. % of elemental B) | 7.9 | | 8.1 | |
| Nitrogen (N) content (in wt. % of elemental N) | 4.2 | | 4.3 | |

| | | | | |
|---|---|---|---|---|
| * MEA = monoethanolamine | | | | |

With reference to Ex2, said Ex2 comprising both a monoethanolamine salt of the compound (S) according to formula (Is-a) and a monoethanolamine boron complex, a gel is formed, said gel thereby incorporating both sulphur and boron in high concentrations and further demonstrating excellent stability and solubilizing and dosing properties.

## Claims

1. An aqueous fertilizer composition [composition (C), herein after] comprising at least one alkanolamine salt of a sulphonic acid according to general Formula (I_{S}) [compound (S), herein after] 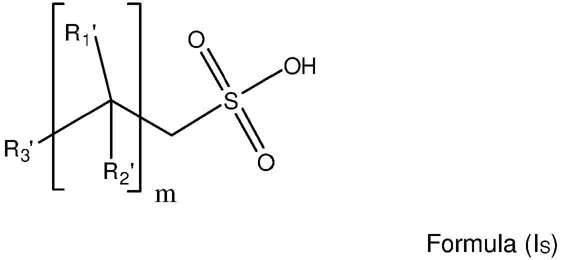 wherein:
- each of m is an integer in the range from 0, 1, or 2;
- each of R₁' is independently selected from the group consisting of hydrogen, halo, methyl, ethyl, propyl, isopropyl, and CF₃;
- each of R₂' is independently selected from the group consisting of hydrogen, halo, methyl, ethyl, propyl, isopropyl, and CF₃; and
- each of R₃' is independently selected from the group consisting of hydrogen, halo, C₁₋₄ alkyl, and Si(R₄')₃, and wherein said C₁₋₄ alkyl is optionally substituted with one or more substituents selected from halo, or methyl, and wherein each of R₄', independently from each other and at each occurrence, is C₁₋₄ alkyl.

2. The composition (C) according to claim 1, wherein each of R₁' is independently selected from the group consisting of hydrogen, halo, methyl, and ethyl; preferably, each of R₁' is independently selected from hydrogen or methyl; more preferably, each of R₁' is hydrogen.

3. The composition (C) according to any one of claims 1 or 2, wherein each of R₂' is independently selected from the group consisting of hydrogen, halo, methyl, and ethyl; preferably, each of R₂' is independently selected from hydrogen or methyl; more preferably, each of R₂' is hydrogen.

4. The composition (C) according to any one of claims 1 to 3, wherein each of R₃' is independently selected from the group consisting of hydrogen, halo, methyl, ethyl, propyl, isopropyl, and Si(R₄')₃, and wherein each of R₄', equal to or different from each other and at each occurrence, is independently selected from the group consisting of methyl, ethyl, propyl, and isopropyl; preferably, each of R₃' is independently selected from the group consisting of hydrogen, halo, methyl, ethyl, and Si(R₄')₃, and wherein each of R₄', equal to or different from each other and at each occurrence, is methyl or ethyl; more preferably, each of R₃' is independently selected from the group consisting of hydrogen, halo, methyl, and Si(R₄')₃, and wherein each of R₄' is methyl; more preferably, each of R₃' is independently selected from hydrogen or methyl; more preferably, each of R₃' is hydrogen.

5. The composition (C) according to any one of claims 1 to 4, wherein the compound (S) is of Formula (Is-a)

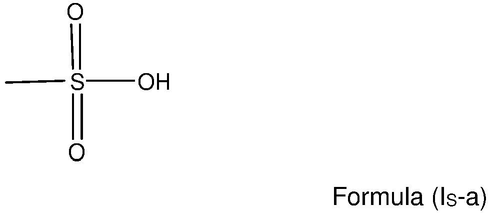

6. The composition (C) according to any one of claims 1 to 5, wherein the composition (C) comprises at least one alkanolamine metal or boron complex, wherein the metal is selected from the group consisting of zinc (Zn), copper (Cu), manganese (Mn), and iron (Fe).

7. The composition (C) according to any one of claims 1 to 6, wherein the alkanolamine of the at least one alkanolamine salt is selected from the group consisting of monoethanolamine, diethanolamine, triethanolamine, monoisopropanolamine, diisopropanolamine, triisopropanolamine, and 2-amino-1-butanol; preferably selected from the group consisting of monoethanolamine, diethanolamine, and triethanolamine.

8. The composition (C) according to any one of claims 1 to 7, wherein the alkanolamine of the at least one alkanolamine metal or boron complex is the same or different from the alkanolamine of the at least one alkanolamine salt.

9. The composition (C) according to any one of claims 1 to 8, wherein in the composition (C), the alkanolamine is present in an amount from 2.0 to 30.0 wt. %, or in an amount from 2.0 to 20.0 wt. %, or in an amount from 2.5 to 15.0 wt. %, or in an amount from 3.0 to 10.0 wt. %, relative to the total weight of the composition (C).

10. The composition (C) according to any one of claims 1 to 9, wherein in the composition (C), the molar ratio of the compound (S) to the alkanolamine is from 10.0:1.0 to 1.0:10.0, or from 5.0:1.0 to 1.0:5.0, or from 3.0:1.0 to 1.0:3.0, or from 1.5:1.0 to 1.0:1.5, or from 1.5:1.0 to 1.0:1.0.

11. The composition (C) according to any one of claims 6 to 10, wherein in the composition (C), the molar ratio of the metal or boron to the alkanolamine is from 10.0:1.0 to 1.0:10.0, or 10.0:1.0 to 1.0:5.0, or from 9.0:1.0 to 1.0:3.0, or from 9.0:1.0 to 1.0:2.0, or from 8.0:1.0 to 1.0:1.0.

12. The composition (C) according to any one of claims 1 to 11, wherein water, relative to the total weight of the composition (C), is present in an amount from 1.0 to 20.0 wt. %, preferably from 2.0 to 19.0 wt. %, preferably from 3.0 to 18.0 wt. %, preferably from 3.0 to 17.0 wt. %, preferably from 3.5 to 16.0 wt. %.

13. The composition (C) according to any one of claims 1 to 12, wherein the composition (C) comprises at least one gelling agent selected from the group consisting of gum Arabic, alginic acid, alginates, xanthan gum, guar gum, tragacanth gum, methyl cellulose, cellulose ethers, cellulose acetate, ethyl cellulose, hydroxyethyl cellulose, hydroxyethyl methyl cellulose, starch, gelatine, carrageenan, locust bean gum, pectin, succinoglycans, and pullulan.

14. The composition (C) according to any one of claims 1 to 13, wherein the composition (C) comprises the at least one gelling agent in an amount from 0.05 to 5.00 wt. %, relative to the total weight of the composition (C).

15. Use of the composition (C), according to any one of claims 1 to 14, for fertilization purposes to provide plant nutrition for growing plants; preferably wherein said use comprises supplying the composition (C), according to any one of claims 1 to 14, by spraying, atomizing, vaporizing, drenching, watering, squirting, sprinkling, pouring, fumigating, injecting, painting, seed treating, coating, immersing, soaking by using conventional equipment such as but not limited to a handpump, a backpack sprayer, or a boomsprayer.

## Patentansprüche

1. Eine wässrige Düngemittelzusammensetzung [nachstehend Zusammensetzung (C)], welche zumindest ein Alkanolaminsalz einer Sulfonsäure nach der allgemeinen Formel (I_{S}) [nachstehend Verbindung (S)] umfasst, 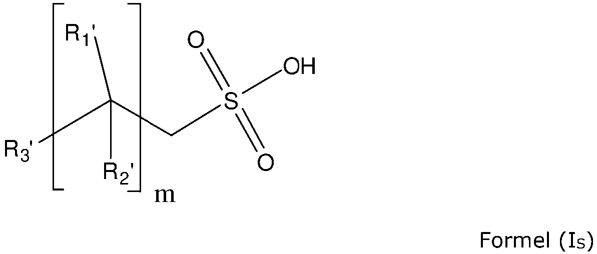 wobei:
- jedes m eine Ganzzahl im Bereich von 0, 1, oder 2 ist;
- jedes R₁' unabhängig ausgewählt ist aus der Gruppe bestehend aus Wasserstoff, Halo, Methyl, Ethyl, Propyl, Isopropyl, und CF₃;
- jedes R₂' unabhängig ausgewählt ist aus der Gruppe bestehend aus Wasserstoff, Halo, Methyl, Ethyl, Propyl, Isopropyl, und CF₃; und
- jedes R₃' unabhängig ausgewählt ist aus der Gruppe bestehend aus Wasserstoff, Halo, C₁₋₄-Alkyl, und Si(R₄')₃, und wobei das C₁₋₄-Alkyl optional ersetzt ist durch einen oder mehrere Substituenten ausgewählt aus Halo, oder Methyl, und wobei jedes R₄', unabhängig voneinander und bei jedem Vorkommen, C₁₋₄-Alkyl ist.

2. Die Zusammensetzung (C) nach Anspruch 1, wobei jedes R₁' unabhängig ausgewählt ist aus der Gruppe bestehend aus Wasserstoff, Halo, Methyl, und Ethyl; jedes R₁' bevorzugt unabhängig ausgewählt ist aus Wasserstoff oder Methyl; jedes R₁' noch besser Wasserstoff ist.

3. Die Zusammensetzung (C) nach irgendeinem der Ansprüche 1 oder 2, wobei jedes R₂' unabhängig ausgewählt ist aus der Gruppe bestehend aus Wasserstoff, Halo, Methyl, und Ethyl; jedes R₂' bevorzugt unabhängig ausgewählt ist aus Wasserstoff oder Methyl; jedes R₂' noch besser Wasserstoff ist.

4. Die Zusammensetzung (C) nach irgendeinem der Ansprüche 1 bis 3, wobei jedes R₃' unabhängig ausgewählt ist aus der Gruppe bestehend aus Wasserstoff, Halo, Methyl, Ethyl, Propyl, Isopropyl, und Si(R₄')₃, und wobei jedes R₄', gleich wie oder unterschiedlich voneinander und bei jedem Vorkommen, unabhängig ausgewählt ist aus der Gruppe bestehend aus Methyl, Ethyl, Propyl, und Isopropyl; jedes R₃' bevorzugt unabhängig ausgewählt ist aus der Gruppe bestehend aus Wasserstoff, Halo, Methyl, Ethyl, und Si(R₄')₃, und wobei jedes R₄', gleich wie oder unterschiedlich voneinander und bei jedem Vorkommen, Methyl oder Ethyl ist; jedes R₃' noch besser unabhängig ausgewählt ist aus der Gruppe bestehend aus Wasserstoff, Halo, Methyl, und Si(R₄')₃, und wobei jedes R₄' Methyl ist; jedes R₃' noch besser unabhängig ausgewählt ist aus Wasserstoff oder Methyl; jedes R₃' noch besser Wasserstoff ist.

5. Die Zusammensetzung (C) nach irgendeinem der Ansprüche 1 bis 4, wobei die Verbindung (S) die Formel (I_{S}-a) hat

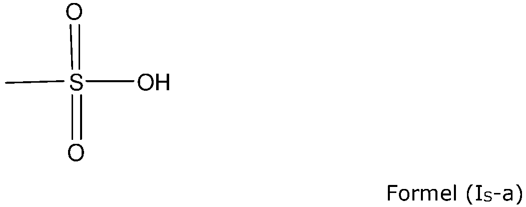

6. Die Zusammensetzung (C) nach irgendeinem der Ansprüche 1 bis 5, wobei die Zusammensetzung (C) zumindest ein Alkanolaminmetall oder einen Borkomplex umfasst, wobei das Metall ausgewählt ist aus der Gruppe bestehend aus Zink (Zn), Kupfer (Cu), Mangan (Mn), und Eisen (Fe).

7. Die Zusammensetzung (C) nach irgendeinem der Ansprüche 1 bis 6, wobei das Alkanolamin des zumindest einen Alkanolaminsalzes ausgewählt ist aus der Gruppe bestehend aus Monoethanolamin, Diethanolamin, Triethanolamin, Monoisopropanolamin, Diisopropanolamin, Triisopropanolamin, und 2-Amino-1-butanol; bevorzugt ausgewählt aus der Gruppe bestehend aus Monoethanolamin, Diethanolamin, und Triethanolamin.

8. Die Zusammensetzung (C) nach irgendeinem der Ansprüche 1 bis 7, wobei das Alkanolamin des zumindest einen Alkanolaminmetalls oder Borkomplexes gleich wie oder anders als das Alkanolamin des zumindest einen Alkanolaminsalzes ist.

9. Die Zusammensetzung (C) nach irgendeinem der Ansprüche 1 bis 8, wobei in der Zusammensetzung (C), in Bezug auf das Gesamtgewicht der Zusammensetzung (C), das Alkanolamin in einer Menge von 2,0 bis 30,0 Gew.-%, oder in einer Menge von 2,0 bis 20,0 Gew.-%, oder in einer Menge von 2,5 bis 15,0 Gew.-%, oder in einer Menge von 3,0 bis 10,0 Gew.-% vorhanden ist.

10. Die Zusammensetzung (C) nach irgendeinem der Ansprüche 1 bis 9, wobei in der Zusammensetzung (C), das Stoffmengenverhältnis der Verbindung (S) zum Alkanolamin von 10,0:1,0 bis 1,0:10,0, oder von 5,0:1,0 bis 1,0:5,0, oder von 3,0:1,0 bis 1,0:3,0, oder von 1,5:1,0 bis 1,0:1,5, oder von 1,5:1,0 bis 1,0:1,0 beträgt.

11. Die Zusammensetzung (C) nach irgendeinem der Ansprüche 6 bis 10, wobei in der Zusammensetzung (C), das Stoffmengenverhältnis des Metalls oder Bors zum Alkanolamin von 10,0:1,0 bis 1,0:10,0, oder 10,0:1,0 bis 1,0:5,0, oder von 9,0:1,0 bis 1,0:3,0, oder von 9,0:1,0 bis 1,0:2,0, oder von 8,0:1,0 bis 1,0:1,0 beträgt.

12. Die Zusammensetzung (C) nach irgendeinem der Ansprüche 1 bis 11, wobei Wasser, in Bezug auf das Gesamtgewicht der Zusammensetzung (C), in einer Menge von 1,0 bis 20,0 Gew.-%, bevorzugt von 2,0 bis 19,0 Gew.-%, bevorzugt von 3,0 bis 18,0 Gew.-%, bevorzugt von 3,0 bis 17,0 Gew.-%, bevorzugt von 3,5 bis 16,0 Gew.-%, vorhanden ist.

13. Die Zusammensetzung (C) nach irgendeinem der Ansprüche 1 bis 12, wobei die Zusammensetzung (C) mindestens ein Geliermittel ausgewählt aus der Gruppe bestehend aus Gummi arabicum, Alginsäure, Alginaten, Xanthangummi, Guargummi, Traganth, Methylcellulose, Celluloseethern, Celluloseacetat, Ethylcellulose, Hydroxyethylcellulose, Hydroxyethylmethylcellulose, Stärke, Gelatine, Carrageen, Johannisbrotgummi, Pektin, Succinoglycanen, und Pullulan umfasst.

14. Die Zusammensetzung (C) nach irgendeinem der Ansprüche 1 bis 13, wobei die Zusammensetzung (C) das zumindest eine Geliermittel in einer Menge von 0,05 bis 5,00 Gew.-%, in Bezug auf das Gesamtgewicht der Zusammensetzung (C), umfasst.

15. Verwendung der Zusammensetzung (C), nach irgendeinem der Ansprüche 1 bis 14, zu Düngezwecken, um Pflanzennahrung für wachsende Pflanzen zu liefern; bevorzugt wobei die Verwendung das Liefern der Zusammensetzung (C), nach irgendeinem der Ansprüche 1 bis 14, durch Sprühen, Zerstäuben, Verdampfen, Tränken, Wässern, Spritzen, Sprenkeln, Gießen, Begasen, Injizieren, Streichen, Samenbehandeln, Beschichten, Tauchen, Einweichen durch Einsatz herkömmlicher Ausrüstung wie, aber nicht darauf beschränkt, eine Handpumpe, ein Rückensprühgerät oder ein Spritzgestänge, umfasst.

## Revendications

1. Composition fertilisante aqueuse [composition (C), ci-après] comprenant au moins un sel d'alcanolamine d'un acide sulfonique selon la formule générale (I_{S}) [composé (S), ci-après]. 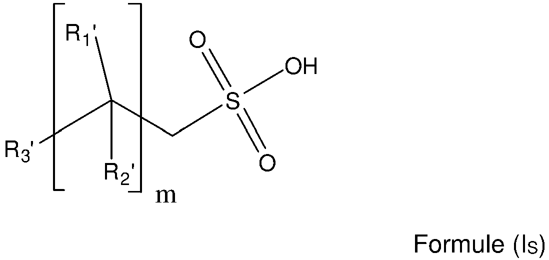 dans laquelle :
- Chacun des m est un nombre entier compris entre 0, 1 ou 2 ;
- chacun des R₁' est indépendamment choisi dans le groupe constitué de l'hydrogène, l'halo, le méthyle, l'éthyle, le propyle, l'isopropyle et le CF₃;
- chacun des R₂' est indépendamment choisi dans le groupe constitué de l'hydrogène, l'halo, le méthyle, l'éthyle, le propyle, l'isopropyle et le CF₃; et
- chacun des R₃' est indépendamment choisi dans le groupe constitué de l'hydrogène, l'halo, l'alkyle en C₁₋₄ et Si(R₄')₃, et dans laquelle ledit alkyle en C₁₋₄ est éventuellement substitué par un ou plusieurs substituants choisis parmi l'halo ou le méthyle, et dans laquelle chacun des R₄', indépendamment l'un de l'autre et à chaque occurrence, est un alkyle en C1-4.

2. Composition (C) selon la revendication 1, dans laquelle chacun des R₁' est indépendamment choisi dans le groupe constitué de l'hydrogène, l'halo, le méthyle et l'éthyle ; de préférence, chacun des R₁' est indépendamment choisi parmi l'hydrogène ou le méthyle ; plus préférentiellement, chacun des R₁' est l'hydrogène.

3. Composition (C) selon l'une quelconque des revendications 1 ou 2, dans laquelle chacun des R₂' est indépendamment choisi dans le groupe constitué de l'hydrogène, l'halo, le méthyle et l'éthyle ; de préférence, chacun des R₂' est indépendamment choisi parmi l'hydrogène ou le méthyle ; plus préférentiellement, chacun des R₂' est l'hydrogène.

4. Composition (C) selon l'une quelconque des revendications 1 à 3, dans laquelle chacun des R₃' est indépendamment choisi dans le groupe constitué de l'hydrogène, l'halo, le méthyle, l'éthyle, le propyle, l'isopropyle et Si(R₄')₃, et dans laquelle chacun des R₄', égal ou différent de l'un l'autre et à chaque occurrence, est indépendamment choisi dans le groupe constitué par le méthyle, l'éthyle, le propyle et l'isopropyle ; de préférence, chacun des R₃' est indépendamment choisi dans le groupe constitué de l'hydrogène, l'halo, le méthyle, l'éthyle et Si(R₄')₃, et où chacun des R₄', égal ou différent l'un de l'autre et à chaque occurrence, est le méthyle ou l'éthyle ; plus préférentiellement, chacun des R₃' est indépendamment choisi dans le groupe constitué de l'hydrogène, l'halo, le méthyle et Si(R₄')₃, et où chacun des R₄' est le méthyle ; plus préférentiellement, chacun des R₃' est indépendamment choisi parmi l'hydrogène ou le méthyle ; plus préférentiellement, chacun des R₃' est l'hydrogène.

5. Composition (C) selon l'une quelconque des revendications 1 à 4, dans laquelle le composé (S) est de formule (Is-a)

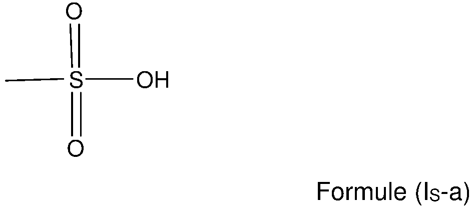

6. Composition (C) selon l'une quelconque des revendications 1 à 5, dans laquelle la composition (C) comprend au moins un complexe métallique ou borique d'alcanolamine, dans laquelle le métal est choisi dans le groupe constitué du zinc (Zn), du cuivre (Cu), du manganèse (Mn) et du fer (Fe).

7. Composition (C) selon l'une quelconque des revendications 1 à 6, dans laquelle l'alcanolamine dudit au moins un sel d'alcanolamine est choisie dans le groupe constitué de la monoéthanolamine, la diéthanolamine, la triéthanolamine, la monoisopropanolamine, la diisopropanolamine, la triisopropanolamine et le 2-amino-1-butanol ; de préférence choisie dans le groupe constitué de la monoéthanolamine, la diéthanolamine et la triéthanolamine.

8. Composition (C) selon l'une quelconque des revendications 1 à 7, dans laquelle l'alcanolamine dudit au moins un complexe métallique ou borique d'alcanolamine est identique ou différente de l'alcanolamine dudit au moins un sel d'alcanolamine.

9. Composition (C) selon l'une quelconque des revendications 1 à 8, dans laquelle dans la composition (C), l'alcanolamine est présente dans une quantité de 2,0 à 30,0 % en poids, ou dans une quantité de 2,0 à 20,0 % en poids, ou dans une quantité de 2,5 à 15,0 % en poids, ou dans une quantité de 3,0 à 10,0 % en poids, par rapport au poids total de la composition (C).

10. Composition (C) selon l'une quelconque des revendications 1 à 9, dans laquelle dans la composition (C), le rapport molaire du composé (S) à l'alcanolamine est de 10.0:1,0 à 1,0:10,0, ou de 5,0:1,0 à 1,0:5,0, ou de 3,0:1,0 à 1,0:3,0, ou de 1,5:1,0 à 1,0:1,5, ou de 1,5:1,0 à 1,0:1,0.

11. Composition (C) selon l'une quelconque des revendications 6 à 10, dans laquelle dans la composition (C), le rapport molaire du métal ou du bore à l'alcanolamine est de 10,0:1,0 à 1,0:10,0, ou de 10,0:1,0 à 1,0:5,0, ou de 9,0:1,0 à 1,0:3,0, ou de 9,0:1,0 à 1,0:2,0, ou de 8,0:1,0 à 1,0:1,0.

12. Composition (C) selon l'une quelconque des revendications 1 à 11, dans laquelle l'eau, par rapport au poids total de la composition (C), est présente dans une quantité allant de 1,0 à 20,0 % en poids, de préférence de 2,0 à 19,0 % en poids, de préférence de 3,0 à 18,0 % en poids, de préférence de 3,0 à 17,0 % en poids, de préférence de 3,5 à 16,0 % en poids.

13. Composition (C) selon l'une quelconque des revendications 1 à 12, dans laquelle la composition (C) comprend au moins un agent gélifiant choisi dans le groupe constitué de la gomme arabique, l'acide alginique, les alginates, la gomme xanthane, la gomme guar, la gomme adragante, la méthylcellulose, les éthers de cellulose, l'acétate de cellulose, l'éthylcellulose, l'hydroxyéthylcellulose, l'hydroxyéthylméthylcellulose, l'amidon, le gélatine, la carraghénane, la gomme de caroube, la pectine, les succinoglycanes et le pullulane.

14. Composition (C) selon l'une quelconque des revendications 1 à 13, dans laquelle la composition (C) comprend ledit au moins un agent gélifiant dans une quantité de 0,05 à 5,00 % en poids, par rapport au poids total de la composition (C).

15. Utilisation de la composition (C), selon l'une quelconque des revendications 1 à 14, à des fins de fertilisation pour fournir une nutrition aux plantes en croissance ; de préférence, dans laquelle ladite utilisation comprend la fourniture de la composition (C), selon l'une quelconque des revendications 1 à 14, par pulvérisation, atomisation, vaporisation, trempage, arrosage, giclage, saupoudrage, versement, fumigation, injection, peinture, traitement des semences, enrobage, immersion, imbibition à l'aide d'un équipement conventionnel tel que mais sans s'y limiter une pompe à main, un pulvérisateur à dos ou un pulvérisateur à rampe.
